# EUROPEAN PATENT APPLICATION

(11) **EP 4 541 493 A1**
(43) Date of publication of application: **23.04.2025**
(21) Application number: 24207220.5
(22) Date of filing: 17.10.2024
(51) Int. Cl.: B23F 19/00, F16H 55/08

(54) **HELICAL GEAR AND MACHINING METHOD THEREOF**

(30) Priority: 20.10.2023 CN 202311364805
(71) Applicant: Volvo Car Corporation, 405 31 Göteborg (SE)
(72) Inventor: SHAO, Weizhong, Shanghai (CN); YANG, Chengmin, Shanghai (CN); XU, Shuai, Shanghai (CN); LI, Yunlei, Shanghai (CN)
(74) Representative: Maiwald GmbH

(57) **Abstract**

A helical gear and a machining method thereof. Each tooth of the helical gear includes a tooth surface profile, the tooth surface profile includes a series of peaks and a series of valleys, the series of peaks or the series of valleys form a ripple direction, and the helical gear forms a meshing line during meshing, and the helical gear includes a predetermined noise sound pressure level threshold, which is characterized in that an angle between the ripple direction and the meshing line is selected so that an actual noise sound pressure level of the helical gear is less than the predetermined noise sound pressure level threshold, and a difference between the actual noise sound pressure level and the predetermined noise sound pressure level threshold increases with an increase of the angle.

## Description

### TECHNICAL FIELD

The present disclosure relates to a helical gear and a machining method thereof, and more particularly relates to a machining method for changing a tooth surface profile of the helical gear to change a ripple direction. The helical gear can be used for a transmission of a motor vehicle, especially an electric vehicle.

### BACKGROUND

An electric vehicle is a motor-driven electric vehicle with hybrid drive or full electric drive. Because there is no background noise of the engine to cover up, it puts forward higher requirements for NVH (Noise, Vibration and Harshness) in terms of vehicle manufacturing quality.

As we all know, the helical gear is a key part of the transmission, and the noise generated when the helical gear is engaged is the main noise source of the transmission and even the electric vehicle.

In order to improve the NVH performance of the transmission, generally, the ripple amplitude of different orders of helical gears is controlled. However, this technical solution has the following shortcomings: 1. it is difficult to control the amplitude all the time, especially when the machining tool of helical gears are worn; 2. there are too many orders, which are influenced by machining tool, environment, processing parameters and other factors; 3. the cost of amplitude control is high.

Therefore, a new type of helical gear is needed, which can improve the NVH performance in a simple and cost-effective way.

### SUMMARY

The present disclosure provides a helical gear, each tooth of the helical gear comprises a tooth surface profile, the tooth surface profile comprises a series of peaks and a series of valleys, the series of peaks or the series of valleys form a ripple direction, and the helical gear forms a meshing line during meshing, and the helical gear comprises a predetermined noise sound pressure level threshold, an angle between the ripple direction and the meshing line is selected so that an actual noise sound pressure level of the helical gear is less than the predetermined noise sound pressure level threshold, a difference between the actual noise sound pressure level and the predetermined noise sound pressure level threshold increases with an increase of the angle.

Advantageously, the angle between the ripple direction and the meshing line is greater than 20 degrees.

Advantageously, the angle between the ripple direction and the meshing line is greater than 25 degrees.

Advantageously, the helical gear is of a gear honing type or a gear grinding type.

At another aspect, the present disclosure further provides a machining method of a helical gear, which comprising: providing a machining tool; providing a helical gear blank; machining the helical gear blank with the machining tool to form a helical gear, wherein each tooth of the helical gear comprises a tooth surface profile, the tooth surface profile comprises a series of peaks and a series of valleys, the series of peaks or the series of valleys form a ripple direction, and the helical gear forms a meshing line during meshing, and the helical gear comprises a predetermined noise sound pressure level threshold, an angle between the ripple direction and the meshing line is selected so that an actual noise sound pressure level of the helical gear is less than the predetermined noise sound pressure level threshold, a difference between the actual noise sound pressure level and the predetermined noise sound pressure level threshold increases with an increase of the angle.

Advantageously, the machining tool comprises a body and a series of inclined cutter teeth arranged on a circumferential surface of the body, and the series of inclined cutter teeth form a first predetermined angle with respect to a first central axis of the body,
the helical gear blank comprises a second central axis,
the machining method comprises inclining the machining tool to make the first central axis of the machining tool form a second predetermined angle with the second central axis of the helical gear blank.

Advantageously, the first predetermined angle and the second predetermined angle are selected so that a sum of the first predetermined angle and the second predetermined angle is equal to a spiral angle of the helical gear, and the actual noise sound pressure level of the helical gear is smaller than the predetermined noise sound pressure level threshold at the same time.

Advantageously, the angle between the ripple direction of the helical gear and the meshing line is greater than 20 degrees.

Advantageously, the angle between the ripple direction of the helical gear and the meshing line is greater than 25 degrees.

Advantageously, the machining tool is a gear honing tool or a gear grinding tool.

### BRIEF DESCRIPTION OF DRAWINGS

The above and other features and advantages of exemplary embodiments of the present disclosure will become more apparent from the following detailed description taken in conjunction with the accompanying drawings, which are for illustrative purposes only and are not intended to limit the scope of the present disclosure in any way, in which:
Fig. 1 shows a tooth surface profile of one tooth according to a helical gear to illustrate a ripple direction and a meshing line.
Fig. 2 shows a comparison of NVH performance of helical gears according to the present disclosure with NVH performance of existing helical gears.
Fig. 3 shows a flowchart of a machining method of a helical gear according to the present disclosure.
Fig. 4(a) shows a schematic diagram corresponding to steps 100 and 200 of the flowchart of Fig. 3.
Fig. 4(b) shows a schematic diagram corresponding to step 300 of the flowchart of Fig. 3.

### DETAILED DESCRIPTION

In order to make the purpose, technical solution and advantages of the technical solution of the present disclosure more clear, the technical solution of the embodiment of the present disclosure will be described clearly and completely with the accompanying drawings of specific embodiments of the present disclosure. Like reference numerals in the drawings represent like parts. It should be noted that the described embodiment is a part of the embodiment of the present disclosure, not the whole embodiment. Based on the described embodiments of the present disclosure, all other embodiments obtained by ordinary people in the field without creative labor belong to the scope of protection of the present disclosure.

Compared with the embodiment shown in the attached drawings, the feasible embodiments within the protection scope of this disclosure may have fewer components, other components not shown in the attached drawings, different components, components arranged differently or components connected differently, etc. Furthermore, two or more components in the drawings may be implemented in a single component, or a single component shown in the drawings may be implemented as a plurality of separate components.

Unless otherwise defined, technical terms or scientific terms used herein shall have their ordinary meanings as understood by people with ordinary skills in the field to which this disclosure belongs. The words "first", "second" and similar words used in the specification and claims of the patent application of this disclosure do not indicate any order, quantity or importance, but are only used to distinguish different components. When the number of parts is not specified, the number of parts can be one or more; Similarly, similar words such as "one", "said" and "the" do not necessarily mean quantity limitation. Similar words such as "including" or "containing" mean that the elements or objects appearing before the word cover the elements or objects listed after the word and their equivalents, without excluding other elements or objects. Similar words such as "install", "setting", "connecting" or "connection" are not limited to physical or mechanical installation, setting and connection, but can include electrical installation, setting and connection, whether directly or indirectly. "Up", "Down", "Left" and "Right" are only used to indicate the relative orientation relationship when the equipment is used or the orientation relationship shown in the attached drawings. When the absolute position of the described object changes, the relative orientation relationship may also change accordingly.

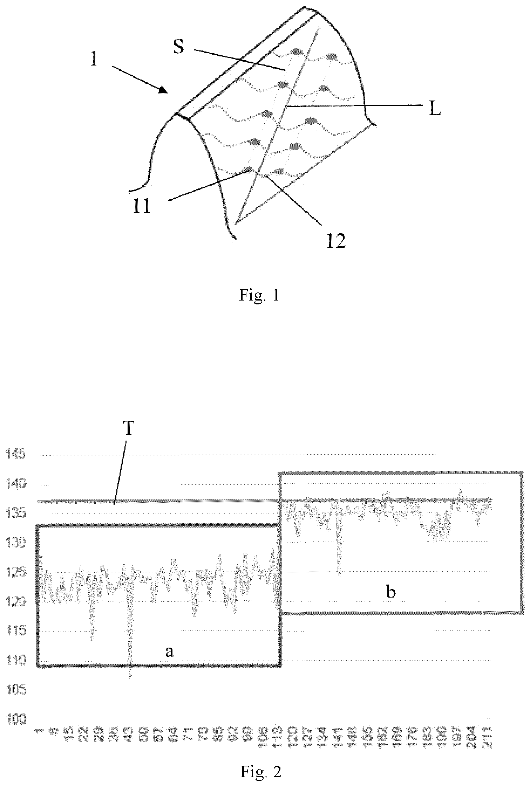

Fig. 1 shows a tooth profile 1 of one tooth of a helical gear, which is used to explain a ripple direction S and a meshing line L. Due to machining, the tooth surface profile 1 is not completely smooth, but has a series of peaks 11 and a series of valleys 12. Under normal circumstances, the series of peaks form a ripple direction, and the series of valleys also form a ripple direction in the same direction. As shown in Fig. 1, the direction of the virtual straight line connecting the series of peaks is the ripple direction. In this application, the ripple direction formed by the peaks is taken as an example of the ripple direction.

The inventor(s) of this application found that the ripple direction has a significant influence on the NVH performance of helical gears, and the NVH performance can be significantly improved by controlling the angle between the ripple direction and the meshing line. In this application, NVH performance can be expressed by noise sound pressure level (in decibels). For a designed helical gear, there is a predetermined noise sound pressure level threshold. In the existing art, generally, the ripple amplitude is changed to make the actual noise sound pressure level of helical gears less than the predetermined noise sound pressure level threshold. In the present application, by selecting the angle between the ripple direction S and the meshing line L of the helical gear, the actual noise sound pressure level of the helical gear is less than the predetermined noise sound pressure level threshold, and a difference between the actual noise sound pressure level and the predetermined noise sound pressure level threshold increases with an increase of the angle.

As an example, the angle between the ripple direction S and the meshing line L of the helical gear in the present application is greater than 20 degrees, preferably greater than 25 degrees, so that the NVH performance is significantly improved. As shown in Fig. 2, an example batch of helical gears is taken as an example to illustrate that changing the angle between the ripple direction and the meshing line will affect the NVH performance. In the batch of helical gears shown in Fig. 2, the angle between the ripple direction and the meshing line is set to 45 degrees, and the noise sound pressure level of the obtained helical gear is shown by *a* in Fig. 2, which is obviously smaller than the predetermined noise sound pressure level threshold (represented by straight line T). As a comparison, the noise sound pressure level of the existing helical gear with a small angle between the ripple direction and the meshing line, or nearly coincident with each other, is as shown by *b* in Fig. 2. It can be seen that the noise sound pressure level of the existing helical gear is very close to the predetermined noise sound pressure level threshold, and even a part of the noise sound pressure level exceeds the predetermined noise sound pressure level threshold. In this way, when machining helical gears, the control accuracy of ripple amplitude can be relaxed, the measurement frequency can be reduced, and the cost can be reduced, while still meeting the required NVH performance, that is, below the NVH threshold. The abscissa in Fig. 2 shows the number of helical gears, which is only exemplary, and the ordinate shows NVH performance, which is expressed by noise sound pressure level and the unit is decibel.

Although Fig. 2 takes 45 degrees as an example, the inventor(s) found that, for the same helical gear, with the increase of the angle between the ripple direction and the meshing line, the farther the noise sound pressure level as obtained is from the predetermined noise sound pressure level threshold, that is, the greater the difference between the noise sound pressure level as obtained and the predetermined noise sound pressure level threshold. For example, for a helical gear with the angle of 45 degrees, the different between the noise sound pressure level and the predetermined noise sound pressure level threshold is about 11.3dB; for a helical gear with the angle of 60 degrees, the different between the noise sound pressure level and the predetermined noise sound pressure level threshold is greater than 11.3dB; and for a helical gear with the angle of 20 degrees, the different between the noise sound pressure level and the predetermined noise sound pressure level threshold is smaller than 11.3dB. It should also be noted that the difference between the noise sound pressure level and the predetermined noise sound pressure level threshold does not necessarily increase proportionally with the increase of angle, as long as the difference between the noise sound pressure level and the predetermined noise sound pressure level threshold increases with the increase of angle.

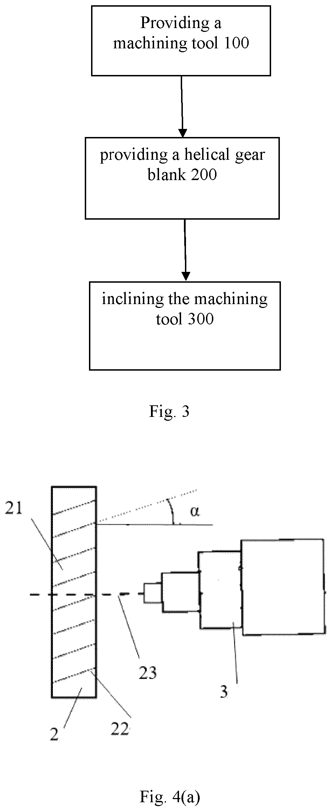

Fig. 3 shows a machining method for machining a helical gear according to the present disclosure together with Figs. 4(a)-4(b). In Fig. 3, first, in step 100, a machining tool 2 is provided, which has a body 21 and a series of inclined cutter teeth 22 arranged on a circumferential surface of the body, and the series of inclined cutter teeth form a first predetermined angle α with respect to a first central axis 23 of the body 21. In step 200, a helical gear blank 3 is provided, which is clamped by a clamping tool (not described). The helical gear blank has a second central axis 31. In this case, the first central axis of the machining tool is parallel to the second central axis of the helical gear blank, and the rotation axis of the machining tool coincides with the first central axis. Although it is shown in Fig. 4(a) that the first central axis 23 and the second central axis 31 coincide, this is only for the purpose of description. In fact, the second central axis 31 and the first central axis 23 will be spaced apart without overlapping.

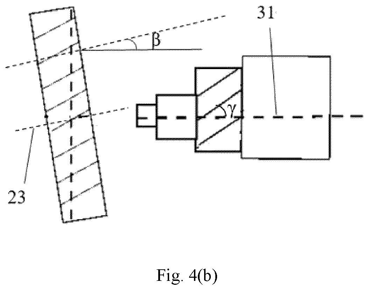

Next, in step 300, inclining the machining tool to machine the helical gear blank to form a helical gear, so that an angle between the ripple direction of the helical gear and the meshing line is greater than 20 degrees. During this step, in particular, the machining tool is inclined so that a second predetermined angle β is formed between the first central axis 23 of the machining tool and the second central axis 31, as shown in Fig. 4(b).

The first predetermined angle α and the second predetermined angle β are selected so that a sum of the first predetermined angle and the second predetermined angle is equal to a spiral angle γ of the helical gear, while ensuring that the actual noise sound pressure level of the helical gear is less than the predetermined noise sound pressure level threshold at the same time. For example, the angle between the ripple direction and the meshing line of the formed helical gear is greater than 20 degrees, preferably greater than 25 degrees.

It should be noted that the second predetermined angle β can be defined as a positive value or a negative value, for example, when the machining tool rotates counterclockwise in the figure, it is defined as a positive value and when it rotates clockwise in the figure, it is defined as a negative value. No matter whether the second predetermined angle is positive or negative, it is only necessary to ensure that the sum of the first predetermined angle and the second predetermined angle is equal to the spiral angle of the helical gear.

The above machining tool is a gear honing tool or a gear grinding tool, that is, the helical gear is of a gear honing type or a gear grinding type.

For example, the spiral angle γ of the helical gear is 30°, the first predetermined angle α of the cutter teeth of the machining tool can be selected as 17°, and the second predetermined angle β can be selected as +13°, so that the sum of the first predetermined angle and the second predetermined angle is 30°, and the actual noise sound pressure level of the helical gear is less than the predetermined noise sound pressure level threshold. It should be understood by those skilled in the art that the above values are only exemplary.

In this application, by selecting the angle between the ripple direction and the meshing line of the helical gear, the actual noise sound pressure level of the helical gear is less than the predetermined noise sound pressure level threshold, and the difference between the actual noise sound pressure level of the helical gear and the predetermined noise sound pressure level threshold increases with the increase of the angle, thereby significantly improving the NVH performance, relaxing the control accuracy of the ripple amplitude, reducing the measurement frequency, thus reducing the cost, and still ensuring that the helical gear can meet the requirements. In addition, the ripple direction is insensitive to the wear of the machining tool, that is, under the condition that other factors remain unchanged, even if the machining tool is worn, the ripple direction will not change significantly, while in the existing art, the ripple amplitude is very sensitive to the wear of the machining tool.

Although the present disclosure has been described in the specification and illustrated in the drawings on the basis of referring to various embodiments, those skilled in the art can understand that the above-mentioned embodiments are only preferred embodiments, and some technical features in the embodiments may not be necessary for solving specific technical problems, so these technical features may not be needed or omitted without affecting the solution of technical problems or the formation of technical solutions; Moreover, the features, elements and/or functions of one embodiment can be combined, assembled or coordinated with those of one or more other embodiments as appropriate, unless the combination, assemble or coordination is obviously impracticable.

## Claims

1. A helical gear, wherein each tooth of the helical gear comprises a tooth surface profile, the tooth surface profile comprises a series of peaks and a series of valleys, the series of peaks or the series of valleys form a ripple direction, and the helical gear forms a meshing line during meshing, and the helical gear comprises a predetermined noise sound pressure level threshold, which is **characterized in that** an angle between the ripple direction and the meshing line is selected so that an actual noise sound pressure level of the helical gear is less than the predetermined noise sound pressure level threshold.

2. The helical gear according to claim 1, wherein a difference between the actual noise sound pressure level and the predetermined noise sound pressure level threshold increases with an increase of the angle.

3. The helical gear according to claim 1, wherein the angle between the ripple direction and the meshing line is greater than 20 degrees.

4. The helical gear as claimed in claim 3, wherein the angle between the ripple direction and the meshing line is greater than 25 degrees.

5. The helical gear according to any one of claims 1-4, wherein the helical gear is of a gear honing type or a gear grinding type.

6. A machining method of a helical gear, comprising:
providing a machining tool;
providing a helical gear blank;
machining the helical gear blank with the machining tool to form a helical gear, wherein each tooth of the helical gear comprises a tooth surface profile, the tooth surface profile comprises a series of peaks and a series of valleys, the series of peaks or the series of valleys form a ripple direction, and the helical gear forms a meshing line during meshing, and the helical gear comprises a predetermined noise sound pressure level threshold,
which is **characterized in that** an angle between the ripple direction and the meshing line is selected so that an actual noise sound pressure level of the helical gear is less than the predetermined noise sound pressure level threshold.

7. The machining method according to claim 6, wherein a difference between the actual noise sound pressure level and the predetermined noise sound pressure level threshold increases with an increase of the angle.

8. The machining method according to claim 6, wherein,
the machining tool comprises a body and a series of inclined cutter teeth arranged on a circumferential surface of the body, and the series of inclined cutter teeth form a first predetermined angle with respect to a first central axis of the body,
the helical gear blank comprises a second central axis,
the machining method comprises inclining the machining tool to make the first central axis of the machining tool form a second predetermined angle with the second central axis of the helical gear blank.

9. The machining method according to claim 8, wherein the first predetermined angle and the second predetermined angle are selected so that a sum of the first predetermined angle and the second predetermined angle is equal to a spiral angle of the helical gear, and the actual noise sound pressure level of the helical gear is smaller than the predetermined noise sound pressure level threshold at the same time.

10. The machining method according to claim 6, wherein the angle between the ripple direction of the helical gear and the meshing line is greater than 20 degrees.

11. The machining method according to claim 10, wherein the angle between the ripple direction of the helical gear and the meshing line is greater than 25 degrees.

12. The machining method according to any one of claims 6-11, wherein the machining tool is a gear honing tool or a gear grinding tool.
